# EUROPEAN PATENT APPLICATION

(11) **EP 3 351 918 A1**
(43) Date of publication of application: **25.07.2018**
(21) Application number: 16846057.4
(22) Date of filing: 17.06.2016
(51) Int. Cl.: G01M 99/00, B61F 5/24

(54) **CONTROLLER**

(30) Priority: 14.09.2015 JP 2015180626
(71) Applicant: KYB Corporation, Tokyo 105-6111 (JP)
(72) Inventor: MURATA, Mitsuru, Tokyo 105-6111 (JP); OGAWA, Yoshihiro, Tokyo 105-6111 (JP)
(74) Representative: MFG Patentanwälte Meyer-Wildhagen Meggle-Freund Gerhard PartG mbB
(86) International application number: PCT/JP2016/068094
(87) International publication number: WO 2017/047184

(57) **Abstract**

To provide a controller capable of predicting the maintenance timing of a constituent component such as a board or an electronic component or a cooling fan mounted on a board.

A controller (C) of the present invention obtains a remaining life of at least one or more of a substrate (1), an electronic component (2) mounted on the board (1), and a cooling fan (3) based on temperatures detected by temperature sensors (S1), (S2) installed on the board (1).

## Description

### Technical Field

The present invention relates to controllers.

### Background Art

A vibration controlling device for a railroad car, for example, has an actuator, which is interposed between a car body and a carriage, and a controller, which controls the actuator, in order to suppress vibrations in a left-right direction with respect to a traveling direction of the car body of the railroad car.

More specifically, as disclosed in JP 2010-065797 A, the actuator includes: a cylinder coupled to one of the carriage and the car body of the railroad car, a piston slidably inserted in the cylinder, a rod inserted in the cylinder and coupled to a piston and the other one of the carriage and the car body, a rod-side chamber and a piston-side chamber divided by the piston in the cylinder, a tank, a first open/close valve provided at an intermediate part of a first passage communicating the rod-side chamber and the piston-side chamber, a second open/close valve provided at an intermediate part of a second passage communicating the piston-side chamber and the tank, a pump which supplies operating oil to the rod-side chamber, a discharge passage connecting the rod-side chamber to the tank, and a variable relief valve provided at an intermediate part of the discharge passage and capable of changing a valve opening pressure. The pump, the first open/close valve, the second open/close valve, and the variable relief valve are driven by the controller so as to cause the actuator to exert thrust force and suppress the vibrations of the car body of the railroad car.

In such a controller, a control board is housed in a case in order to control the pump and the valves, and a cooling fan is provided in order to suppress temperature increase of the control board. The cooling fan includes a ball bearing, a rotation shaft rotatably supported by the ball bearing and having a plurality of blades at the outer periphery thereof, and a motor which drives the rotation shaft. The bearing has grease in the interior thereof. Under high temperature, the viscosity of the grease is lowered, and lubrication performance is lowered. Therefore, the higher the temperature, the more advances deterioration. Therefore, as disclosed in JP 2005-043258 A, it has been proposed to detect the temperature and vibrations of the bearing to detect an abnormality of the bearing.

### Summary of the Invention

In this manner, in the conventional technique, the abnormality of the bearing can be detected. However, maintenance timing of the bearing cannot be predicted, and the maintenance of the bearing has to be carried out after the abnormality occurs.

In the technique disclosed in JP 2005-043258 A, the abnormality of the bearing can be detected, but the maintenance timing about the board in the controller and electronic components mounted on the board cannot be predicted.

Thus, the present invention has been invented in order to solve the above described problems, and it is an object to provide a controller capable of predicting the maintenance timing of a constituent component such as a board, an electronic component mounted on the board, or a cooling fan.

A controller of the present invention obtains a remaining life of at least one or more of a board, an electronic component mounted on the board, and a cooling fan based on the temperature detected by a temperature sensor installed on the board.

### Brief Description of Drawings

Fig. 1 is a schematic view of a controller of an embodiment.
Fig. 2 is a schematic view of an actuator controlled by the controller of the embodiment.
Fig. 3 is a flow chart showing a processing procedure of the controller of the embodiment.

### Description of Embodiments

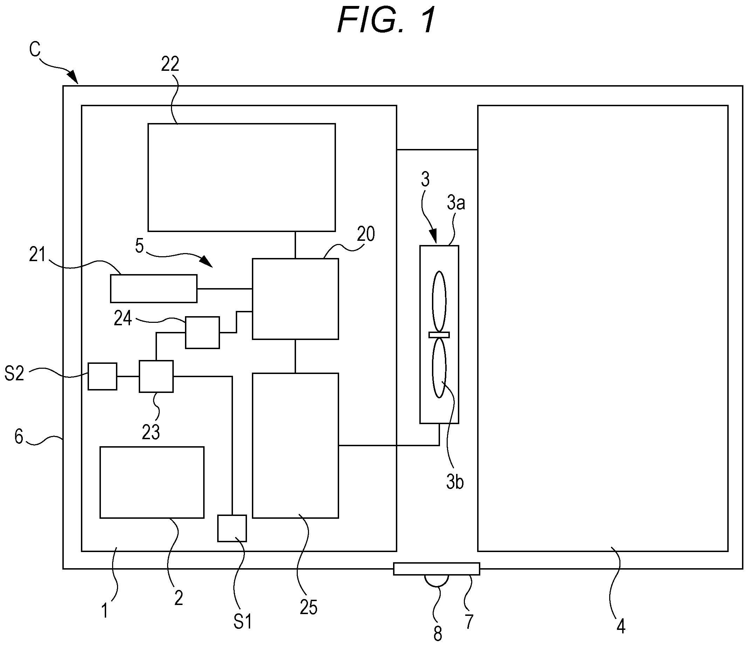

Hereinafter, the present invention will be described based on embodiments shown in drawings. As shown in Fig. 1, a controller C in the present embodiment includes a board 1 on which an electronic component 2 is mounted, temperature sensors S1 and S2 provided on the board 1, a cooling fan 3, a power-source board 4, a remaining-life computing unit 5 similarly provided on the board 1, and a case 6 housing them.

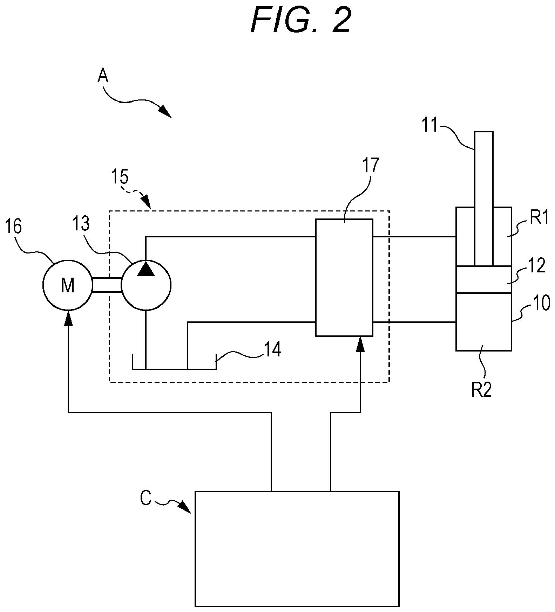

Hereinafter, each part of the controller C will be described in detail. In the present example, as shown in Fig. 2, the controller C is interposed between a car body and a carriage of a railroad car so as to control an actuator A, which suppresses vibrations of the car body.

The actuator A is provided with: a cylinder 10; a rod 11 which is movably inserted in the cylinder 10; a piston 12 which is coupled to the rod 11, is movably inserted in the cylinder 10, and divides the interior of the cylinder 10 into an extension-side chamber R1 and a compression-side chamber R2; a pump 13; a tank 14; and an oil-hydraulic circuit 15 which selectively connects the pump 13 and the tank 14 to the extension-side chamber R1 and the compression-side chamber R2 to cause the actuator A to undergo expansion/contraction actuation. The oil-hydraulic circuit 15 has an electromagnetic valve 17 for selectively connecting the pump 13 and the tank 14 to the extension-side chamber R1 and the compression-side chamber R2.

The controller C is configured to receive input of acceleration information of the car body of the railroad car and generate control commands for driving the motor 16, which drives the pump 13, and the electromagnetic valve 17 so as to cause the actuator A to exert control force to suppress the vibrations of the car body.

In order to do this, the controller C has a Central Processing Unit (CPU) 20, which is provided on the board 1, and a memory 21, which provides a storage area when computation processing in the CPU 20 is executed and stores a program(s) executed by the CPU 20. Moreover, the controller C has a driver circuit 22, which drives the motor 16 and the electromagnetic valve 17 of the actuator A.

On the board 1, the electronic component 2 such as a capacitor provided in order to, for example, supply stable electric power to the CPU 20 is mounted, and, in addition, the temperature sensors S1 and S2 are attached. Moreover, on the board 1, a lowpass filter circuit 23, which removes high-frequency components of the signals output from the temperature sensors S1 and S2, is provided, and the signals processed in the lowpass filter circuit 23 are configured to be processed in an A/D converter 24 and then input to the CPU 20. The temperature sensors S1 and S2 are disposed at the positions which are distant from each other on the board 1 so that the temperatures at two locations in the case 6 in which the board 1 is housed can be detected. The number of installed temperature sensor(s) may be one or more.

Furthermore, the board 1 has a fan drive circuit 25, which drives the cooling fan 3, and the cooling fan 3 is configured to be driven by electric power supply from the fan drive circuit 25.

The case 6 has a box shape and houses, in the interior thereof, the board 1, the power-source board 4, and the cooling fan 3. The cooling fan 3 is disposed at a center in the case 6 in this example, and, when driven, the cooling fan 3 agitates the air in the case 6 and suppresses temperature increases of the board 1, the electronic component 2, and the power-source board 4. Although details are not illustrated, the cooling fan 3 has blades 3b, which are rotatably attached to a case 3a; an unillustrated motor, which subjects the blades 3b to rotary drive; and an unillustrated bearing, which is retained by the case 3a and rotatably supports a shaft. The case 3a is fixed to the case 6.

Moreover, the controller C has a warning unit 7. The warning unit 7 has a Light Emitting Diode (LED) 8 attached to the case 6 in a manner that the LED is visible from outside of the case 6. If the CPU 20 determines that maintenance which requires replacement of the cooling fan 3 is required, the warning unit 7 lights the LED 8 so as to give a warning that the maintenance is required.

Note that the power-source board 4 is configured to receive electric power supply from an external power source so as to be able to supply electric power to the CPU 20, the memory 21, the electronic component 2, the driver circuit 22, the temperature sensors S1 and S2, and the fan drive circuit 25 mounted on the board 1 at a voltage required for operation of each of them.

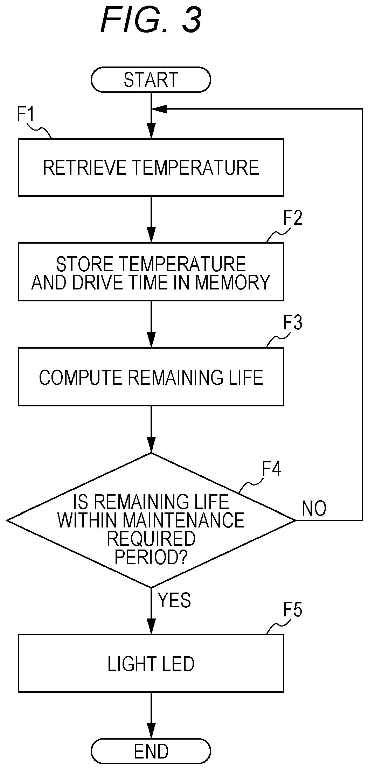

The remaining-life computing unit 5 is realized by execution of the program stored in the memory 21 of the CPU 20. Specifically, when a processing procedure shown in Fig. 3 is executed by the CPU 20, the remaining-life computing unit 5 is realized.

The CPU 20 retrieves a temperature in the case 6, which is input from the temperature sensors S1 and S2 (step F1). In this case, since the temperatures are input from the two temperature sensors S1 and S2, the CPU 20 retrieves the average value of the temperatures obtained from the two temperature sensors S1 and S2 as the temperature in the case 6.

Subsequently, the CPU 20 stores the retrieved temperature and the drive time and temperature of the cooling fan 3, which is taken from a previous temperature retrieval until a temperature retrieval of this time, in the memory 21 (step F2). Note that, although this is not a process of the remaining-life computing unit 5, the cooling fan 3 is configured to be driven when the temperature in the case 6 is equal to or more than a set temperature which is set in advance. The set temperature can be arbitrarily set, wherein the set temperature is set, for example, depending on a usable temperature condition of the bearing of the cooling fan 3 or permissible maximum temperatures of the board 1 and the electronic component 2. Therefore, in addition to the processing as the remaining-life computing unit 5 and the processing as a control device of the actuator A, the CPU 20 executes drive control of the cooling fan 3.

Returning to the processing procedure, when the processing of step F2 is finished, the CPU 20 executes the processing of step F3. In step F3, the CPU 20 obtains the remaining life of the cooling fan 3 based on the temperature and the drive time of the cooling fan 3, which are stored in the memory 21. The remaining life is the length of time taken from the present time to durable life. When the remaining life is obtained, the time left until maintenance timing such as future replacement of the cooling fan 3 is found out.

Regarding the life of the bearing, since viscosity characteristics of lubricant oil are changed depending on the temperature, the durable life is determined by the temperature of the environment in which the bearing is used. If the temperature increases, viscosity decreases, and the lubrication performance of the lubricant oil decreases and shortens the life of the bearing; for example, the durable life is 10.4 years at 40 degrees, 6.9 years at 50 degrees, and 4.2 years at 65 degrees. Since the temperature of the bearing depends on the air temperature in the case 6 which is the temperature of the atmosphere surrounding the bearing, the remaining life can be obtained from the temperatures detected by the temperature sensors S1 and S2.

Specifically, the value which is accumulation of the products of the drive time and temperatures of the cooling fan 3 is obtained, and the remaining life is obtained from this accumulated value . In a case of the above described conditions, the total quantity of the heat received by the bearing until the life thereof when it is driven at 40 degrees is "40 degrees × 10.4 years = 416 degrees·year". If the bearing is driven at 50 degrees, the total quantity of the heat received by the bearing until the life thereof is "50 degrees × 6.9 years = 345 degrees·year". Furthermore, if the bearing is driven at 65 degrees, the total quantity of the heat received by the bearing until the life thereof is "65 degrees × 4.2 years = 273 degrees·year".

If one year is assumed to be 365 days, one year is "24 hours × 365 days = 8760 hours". Therefore, for example, if the detected temperature is 50 degrees and the drive time is 1 hour, the total quantity of the heat received by the bearing during this drive time is "50 degrees × 1/8760 = 0.005708 degrees·year". If the total quantity of the heat is converted to a value based on 40 degrees, "0.005708 × 416/345 = 0·006882 degree·year" is obtained. If a case in which the drive time is 1 hour at 65 degrees is also applied to the same idea to convert the total quantity of the heat to a value based on 40 degrees, "65 degrees × 1/8760 × 416/273 = 0·011307 degrees·year" is obtained. In this manner, the detected temperature is multiplied by the drive time of the cooling fan 3 to calculate the total quantity of the heat acted on the bearing in the drive time, and this calculated value is converted to the value based on 40 degrees. Furthermore, when the converted values are accumulated, a total quantity Q of the heat received by the bearing based on 40 degrees is obtained. Then, when the total quantity Q of the heat obtained in the above described manner is subtracted from "416 degrees·year", which is the total quantity of the heat received by the bearing until the life thereof when driven at 40 degrees, a heat quantity R which can be received by the bearing from the present time until the life is obtained. Then, when the heat quantity R is divided by 40 degrees, the remaining life of the bearing is obtained, and the time to the maintenance timing is obtained. The information required for this computation in this example is the total quantity of the heat which can be received by the bearing until the life thereof at each temperature which is equal to or more than 40 degrees, and this information may be mapped and stored in the memory 21 in advance. This map may be a map with which the above described total quantity of heat can be perceived at every 1 degree or may be a map with which it can be perceived at every 10 degrees, wherein, regarding the temperatures therebetween, the quantity of the heat at the temperature may be obtained each time by linear interpolation.

In this manner, the CPU 20 accumulates the products of the drive time and temperatures of the cooling fan 3, obtains the accumulated value which is the total quantity Q of the heat based on 40 degrees received by the bearing until the present time, and obtains the remaining life from the accumulated value .

Note that, instead of the above described way of obtaining the remaining life, a following way may be used. In a case in which the cooling fan 3 is not driven if the average value of the detected temperatures of the temperature sensors S1 and S2 is less than 40 degrees, durable life is considered based on the durable life at 40 degrees under the above described conditions. As a result, the durable life with driving of the bearing under a temperature environment of 40 degrees is 10.4 years, but is 6.9 years at 50 degrees. Therefore, the advance degree of deterioration of the bearing by driving at 50 degrees is about 1.51 times the advance degree of deterioration by driving at 40 degrees. Therefore, driving the cooling fan 3 for one second at 50 degrees is equivalent to driving the cooling fan 3 for 1.51 second at 40 degrees. Since the durable life with driving at 65 degrees is 4.2 years, driving the cooling fan 3 for one second at 65 degrees is equivalent to driving the cooling fan 3 for 1.64 second at 40 degrees.

Therefore, driving the cooling fan 3 at 50 degrees is equal to a state in which the cooling fan 3 is driven for the time that is 1.51 times the actual drive time of the case in which the cooling fan 3 is driven at 40 degrees. Therefore, the remaining life is obtained by multiplying the drive time by a magnification depending on the temperature, obtaining the drive time converted based on 40 degrees, and subtracting the accumulated value of the drive time obtained in the above described manner from the durable life with driving at 40 degrees. In this case, the magnification which multiplies the drive time is different depending on the temperature. Therefore, if the magnification is mapped and stored in the memory 21 in advance, as well as the above described way of obtaining the remaining life from the heat quantity, the remaining life can be obtained from the accumulation of the drive time based on the temperature.

Subsequently, the CPU 20 determines whether the remaining life obtained in the above described manner is within a maintenance required period or not (step F4). If the maintenance required period is, for example, 0.3 year, whether the time from the present time to replacement end timing of the cooling fan 3, in other words, the remaining life of the bearing of the cooling fan 3 from the present time, which is obtained in step F3, is equal to or less than 0.3 year or not is determined to determine whether the maintenance timing has come or not. The maintenance required period is the period in which a replacement operation of the cooling fan 3 is required, and the maintenance required period is set in accordance with a maintenance cycle of the railroad car so that the replacement can be carried out before the cooling fan 3 reaches the life thereof.

If the CPU 20 determines that the remaining life is within the maintenance required period, the CPU 20 lights the LED 8 and gives a warning in order to inform an operator or the like of the controller C that maintenance is required (step F5) . In this case, the warning unit 7 includes the CPU 20 and the LED 8 and is realized by executing the program by the CPU 20 to execute the processing of step F5.

On the other hand, if it is determined in step F4 that the remaining life is not within the maintenance required period, the process returns to step F1, and the CPU 20 repeatedly executes the above described processing.

In the above description, the remaining-life computing unit 5 obtains the time taken until the maintenance of the cooling fan 3 is required (remaining life), but may obtain the remaining life (lives) of the part (s) other than the cooling fan 3. For example, in the board 1, solder used for mounting of the electronic component 2 is cracked due to aging deterioration caused by heat. Therefore, if the durable life thereof for each used temperature condition is perceived in the above described manner, the remaining life serving as the time taken until the maintenance timing at which the board 1 has to be replaced can be obtained based on temperatures. Also regarding the electronic component 2, as long as the electronic component is a capacitor, a switching element, or the like having a durable life which is determined by a usage temperature under influence of heat, the remaining life thereof can be similarly obtained. Therefore, the controller C may obtain the remaining lives of all of the board 1, the electronic component 2 mounted on the board 1, and the cooling fan 3 which cools the board 1 or may obtain the remaining life(lives) of that(those) arbitrarily selected from these.

In the present example, the CPU 20 may be configured to send the information of the obtained remaining life (lives) to a car monitor of the railroad car. In this case, the car monitor may be utilized as a warning unit to cause a screen of the car monitor to display a fact that maintenance is required or display the remaining life(lives) per se as a warning. Therefore, in above described step F5, in addition to lighting of the LED 8 or instead of lighting of the LED 8, the fact that maintenance is required may be displayed as a warning by the car monitor of the railroad car.

In this manner, based on the temperature sensors S1 and S2 installed on the board 1 and the temperatures detected by the temperature sensors S1 and S2, the controller C of the present invention obtains the remaining life (lives) of at least one or more of the board 1, the electronic component 2 mounted on the board 1, and the cooling fan 3 which cools the board 1. Therefore, the controller C of the present invention can predict the maintenance timing of the constituent component such as the board 1, the electronic component 2 mounted on the board 1, or the cooling fan 3. Conventionally, constituent components have been replaced in a preventive manner even before replacement timing. However, since the maintenance timing of the constituent component(s) of the controller C can be predicted in this manner, the replacement timing can be perceived, and unnecessary component replacement can be reduced.

Furthermore, in the controller C of the present example, since the remaining-life computing unit 5 obtains the remaining life based on the temperature and the drive time of the target for which the remaining life is to be obtained, the maintenance timing can be accurately predicted regardless of temperature changes.

In the controller C of the present example, since the remaining-life computing unit 5 obtains the remaining life of the constituent component based on the average value of the temperatures detected by the two or more temperature sensors S1 and S2, even if the constituent component is not disposed near the temperature sensor S1 or S2, the maintenance timing can be accurately predicted for this constituent component.

The controller C of the present example has the case 6 housing the board 1 and the cooling fan 3, and the remaining-life computing unit 5 is provided on the board 1. Therefore, the controller C can obtain the remaining life by self-diagnosis. Therefore, the remaining-life computing unit 5 can be implemented by the CPU 20 mounted on the controller C, and the maintenance timing can be predicted at low cost.

The controller C of the present example has the warning unit 7, which gives a warning urging maintenance when the remaining life obtained by the remaining-life computing unit 5 is equal to or less than the maintenance required period. Therefore, the fact that the situation requires maintenance can be transmitted to the operator, and the operator can execute maintenance timely.

Note that, the controller C has been described as a controller which controls the actuator A of the railroad car, but may be a controller which controls a semi-active damper, and a control target of the controller C is not limited thereto.

Hereinabove, the preferred embodiments of the present invention have been described in detail. However, makeovers, modifications, and changes can be made as long as they do not depart from claims.

This application claims priority from Japanese Patent Application No. 2015-180626 filed on September 14, 2015 to Japanese Patent Office, and all the disclosure of this application is hereby incorporated into the present description by reference.

## Claims

1. A controller comprising:
a temperature sensor(s) installed on a board; and
a remaining-life computing unit that obtains a remaining life of at least one or more of the board, an electronic component mounted on the board, and a cooling fan that cools the board based on a temperature(s) detected by the temperature sensor(s).

2. The controller according to claim 1, wherein
the remaining-life computing unit obtains the remaining life based on the temperature and drive time of a target for which the remaining life is to be obtained.

3. The controller according to claim 1, wherein
two or more of the temperature sensors are provided, and the remaining-life computing unit obtains the remaining life based on an average value of the temperatures detected by the temperature sensors.

4. The controller according to claim 1, comprising
a case that houses the board and the cooling fan, wherein the remaining-life computing unit is provided on the board.

5. The controller according to claim 1, comprising
a warning unit that gives a warning for urging maintenance if the remaining life obtained by the remaining-life computing unit becomes equal to or less than a maintenance required period.
